# FASCICULE DE BREVET EUROPEEN

(11) **EP 1 228 278 B1**
(45) Date de publication et mention de la délivrance du brevet: **17.03.2004**
(21) Numéro de dépôt: 00974606.6
(22) Date de dépôt: 30.10.2000
(51) Int. Cl.: E04C 2/292, F16B 5/00

(54) **PANNEAU DE RECOUVREMENT POUR CONSTRUCTION COMPRENANT DES ELEMENTS MALE ET FEMELLE POUR FORMER UN JOINT ET SON PROCEDE DE FABRICATION**
VERKLEIDUNGSELEMENT MIT INEINANDERGREIFENDEN TEILEN DIE EINE FUGE BILDEN UND VERFAHREN ZUR HERSTELLUNG
LINING PANEL FOR BUILDING COMPRISING MALE AND FEMALE ELEMENTS FOR FORMING A JOINT AND METHOD FOR MAKING SAME

(30) Priorité: 08.11.1999 FR 9914685
(43) Date de publication de la demande: 07.08.2002
(73) Titulaire: Bonnot, Daniel, 21120 Courtivron (FR)
(72) Inventeur: Bonnot, Daniel, 21120 Courtivron (FR)
(74) Mandataire: Bruder, Michel
(86) Numéro de dépôt international: PCT/FR2000/003025
(87) Numéro de publication internationale: WO 2001/034921

(56) Documents cités:
- EP-A- 0 202 944
- CH-A- 402 353

## Description

La présente invention concerne un panneau de recouvrement globalement rectangulaire, fixé aux murs extérieurs ou intérieurs des bâtiments pour procurer une isolation thermique et/ou phonique, et plus particulièrement des profilés positionnés le long de ses bords longitudinaux et/ou transversaux coopérant avec les profilés correspondants des panneaux adjacents pour assurer simultanément leur jointure et leur fixation au mur.

Dans le domaine des panneaux de recouvrement, et plus particulièrement dans la catégorie des panneaux isolants, on connaît bien des panneaux globalement rectangulaires constitués d'au moins un feuillard métallique, de préférence un feuillard d'aluminium pour sa bonne tenue à l'oxydation et ses propriétés ignifuges, et de la mousse polymérisable à chaud telle que de la mousse de polyuréthanne ou analogue. Ces panneaux présentent, par ailleurs, des bords longitudinaux et/ou transversaux avantageusement profilés pour coopérer avec les bords profilés des panneaux adjacents.

C'est, par exemple, le cas du brevet européen EP 0 220 389 concernant un panneau pour couvrir les murs ou les plafonds. Ce panneau est également constitué de mousse de polyuréthanne et d'un feuillard d'aluminium qui forme la face externe du panneau, avantageusement replié à ses extrémités pour former des profils sur les bords longitudinaux dudit panneau. Un premier profil, obtenu par un pliage adéquat du feuillard d'aluminium pour s'étendre depuis la face externe jusqu'à la face interne du panneau, présente la forme d'une languette qui vient s'emboîter juste dans un second profil globalement en forme de U, obtenu de même par un pliage adéquat du feuillard.

Ce type de panneau, et plus particulièrement ce type de joint, présente l'inconvénient de créer un pont thermique avec le mur ou le plafond sur lequel il est fixé ; ce qui diminue considérablement son pouvoir isolant.

A cet égard, on a conçu des panneaux de recouvrement réduisant significativement les ponts thermiques dans les zones de recouvrement entre panneaux adjacents ; c'est, par exemple, le cas du brevet anglais GB 2 093 085 qui concerne des profils de scellement pour des panneaux isolants. Les joints positionnés sur les bords longitudinaux des panneaux sont rigoureusement identiques et sont obtenus dans une matière plastique extrudée telle que du chlorure de polyvinyle. Chaque profil comprend une aile latérale s'étendant sur le tranchant du bord longitudinal et deux jambes s'étendant parallèlement aux faces du panneau sur lesquelles sont solidarisés les feuillards métalliques par des rivets, des clous ou des vis, l'espace séparant les deux feuillards étant rempli par de la mousse de polyuréthanne. Par ailleurs, chaque aile latérale présente une partie élargie en forme générale de crochet s'étendant perpendiculairement aux faces de chaque panneau et qui est apte à coopérer avec le crochet correspondant du panneau adjacent après son engagement perpendiculairement au plan dudit panneau adjacent pour assurer la jonction de deux panneaux consécutifs par clipsage. De plus chaque crochet comprend une bande de matériau élastique procurant l'imperméabilité du joint.

Tous ces joints présentent, toutefois, l'inconvénient d'entraver, lors des variations saisonnières de température, la dilatation des panneaux ; leur déformation sous l'action de la chaleur vient évidemment endommager les joints, entraînant souvent un défaut irréversible d'étanchéité. De plus, ces joints ne présentent pas une bonne résistance à l'arrachement résultant de l'action du vent sur les panneaux. On sait en effet que le vent, et plus particulièrement les bourrasques de vent, crée une dépression à la surface des panneaux qui tend à les arracher du mur sur lequel ils sont fixés.

Par ailleurs, tous ces panneaux isolants doivent être fixés sur des murs ou des plafonds de bâtiments présentant des surfaces planes ou des surfaces préalablement aplanies. Ils sont, en outre, solidarisés aux murs par des vis munies de rondelles traversant les panneaux de part en part ce qui les fragilise, crée des ponts thermiques et nécessite, de surcroît, un temps de pose conséquent ; tout ceci grève d'une manière significative le coût de réalisation d'un mur isolé avec de tels panneaux. Enfin, ce type de fixation perd de son efficacité en cas de dilatation des panneaux faisant apparaître un jeu entre lesdits panneaux et les vis, aggravant l'insuffisance de résistance aux efforts de dépression induits par le vent.

Un premier but de l'invention est de pallier ces inconvénients en proposant un panneau de recouvrement globalement constitué d'une feuille de parement et de mousse polymérisable à chaud comprenant sur ses bords longitudinaux et/ou transversaux des profils en matière plastique extrudée permettant une fixation des panneaux suffisante pour résister aux efforts de dépression induits par le vent et de réaliser un joint entre deux panneaux adjacents parfaitement étanche tout en absorbant les effets de la dilatation thermique lors des variations saisonnières de température, notamment.

A cet égard et conformément à l'invention, le panneau de recouvrement globalement rectangulaire, constitué d'au moins une feuille de parement formant la face avant ou la face visible du panneau lorsqu'il est monté, un revêtement formant la face arrière ou la face d'appui, c'est-à-dire la face en regard du mur ou du plafond, et de mousse polymérisable à chaud, telle que de la mousse de polyuréthanne ou analogue, prise en sandwich entre la feuille de parement et le revêtement, ledit panneau comprenant le long de ses bords longitudinaux et/ou transversaux des éléments en matière plastique coopérant avec les éléments complémentaires des panneaux adjacents pour procurer un joint, remarquable en ce que le joint est constitué d'un élément femelle et d'un élément mâle globalement en forme de L et positionnés respectivement de part et d'autre du panneau le long de ses bords longitudinaux et/ou transversaux, chacun comprenant au moins une première aile d'appui s'étendant sensiblement dans le plan de la face d'appui du panneau et une seconde aile latérale s'étendant sur le tranchant du bord du panneau sensiblement depuis sa face d'appui jusqu'à sa face visible et comprenant des moyens de fixation, ladite aile latérale étant munie à son extrémité, à proximité de la face visible, d'une gorge dans laquelle est solidarisée par des moyens élastiques l'extrémité libre d'une jupe, obtenue par pliage des bords longitudinaux et/ou transversaux de la feuille de parement de telle sorte que, lors de la jonction de deux panneaux, les jupes respectives des panneaux soient en contact élastique

On comprend bien que, lors d'une variation de température, la variation dimensionnelle des panneaux soit compensée par la déformation élastique des jupes procurant ainsi une parfaite étanchéité de la jonction.

Par ailleurs et selon une caractéristique essentielle du panneau conforme à l'invention, l'aile d'appui de l'élément femelle s'étend dans le plan de la face d'appui du panneau depuis son bord longitudinal et/ou transversal vers l'extérieur et comprend des trous pour permettre la fixation dudit panneau sur un mur, un plafond ou autre.

Les trous de la première face d'appui de l'élément femelle sont avantageusement oblongs pour autoriser un certain jeu notamment lors de la dilatation des panneaux et faciliter, lors de la pose, l'alignement desdits panneaux.

Un autre but de l'invention concerne un procédé pour la fabrication de tels panneaux remarquable en ce que l'on déroule une feuille de parement classiquement conditionnée en rouleau pour la mettre à plat, de préférence horizontalement, puis on retourne par pliage ou par moletage les bords longitudinaux et/ou transversaux de la feuille de parement pour former au moins deux jupes globalement verticales ; on garnit ensuite les gorges des joints de colle polymère ou de mastic et on encolle les extrémités libres des jupes de la feuille de parement dans lesdites gorges correspondantes des éléments femelle et mâle ; on étale les composants d'une mousse polymérisable à chaud préalablement dosés et mélangés sur toute la surface de la feuille de parement et sur une hauteur inférieure à celle des éléments femelle et mâle, puis on recouvre la mousse d'un revêtement, un film pare-vapeur par exemple. Enfin, on contrôle l'expansion de la mousse polymérisable dans un conformateur thermique pour finalement obtenir un panneau de recouvrement qui peut être découpé aux dimensions souhaitées.

Selon une exécution particulièrement avantageuse du procédé conforme à l'invention, il est utilisé comme feuille de parement un feuillard métallique, par exemple en aluminium, que l'on vient matricer pour former sur la face visible du panneau un relief décoratif.

D'autres avantages et caractéristiques ressortiront mieux de la description qui va suivre, de plusieurs variantes d'exécution, données à titre d'exemple non limitatif, du panneau conforme à l'invention, en référence aux dessins annexés sur lesquels:
- la figure 1 est une vue en coupe transversale d'un panneau conforme à l'invention,
- la figure 2 est une vue en coupe partielle transversale de deux panneaux joints selon l'invention,

On décrira, dans cet exemple non limitatif, un panneau de recouvrement 1 conforme à l'invention globalement rectangulaire et particulièrement adapté pour l'isolation des bâtiments.

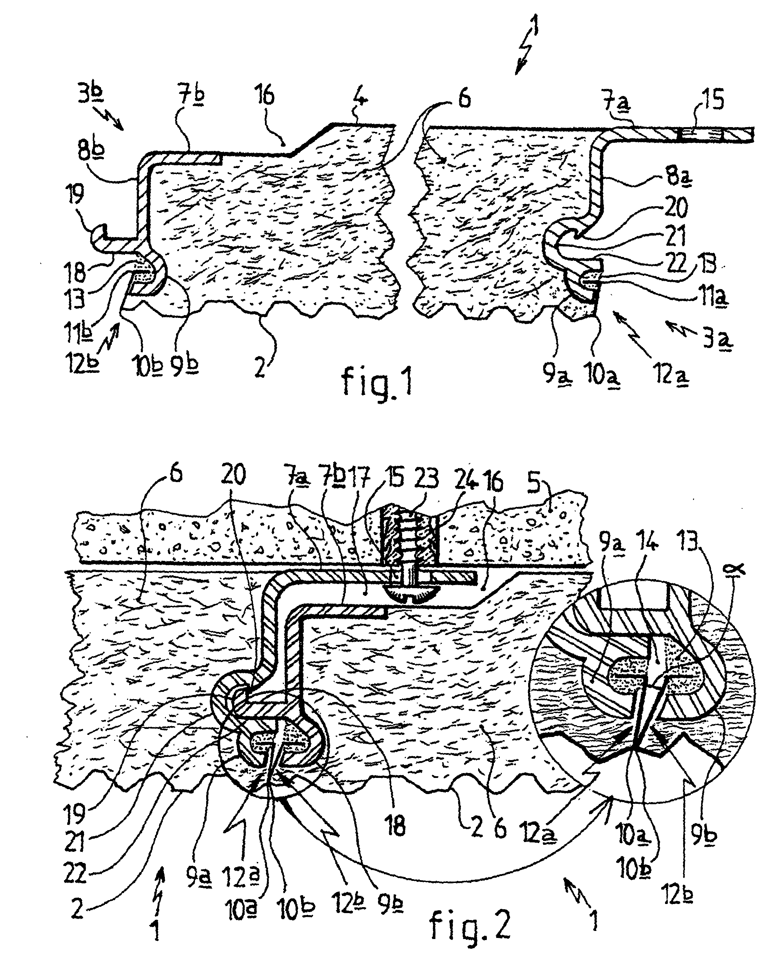

En référence aux figures 1 et 2, le panneau 1 est constitué d'une feuille de parement 2 formant la face avant, c'est-à-dire la face visible du panneau lorsque ce dernier est fixé sur un mur, un plafond ou analogue, qui est avantageusement un feuillard d'aluminium pour procurer au panneau 1 une bonne tenue à l'oxydation et au feu. De plus, la feuille de parement 2 est avantageusement matricée pour donner au panneau 1 un aspect décoratif particulièrement intéressant.

Il va de soi que la feuille de parement 2 peut être parfaitement plane et qu'elle peut être un feuillard métallique quelconque, tel qu'un feuillard en acier ou analogue, ou bien encore une feuille en matière plastique.

Le panneau 1 comprend, par ailleurs, un élément femelle 3a et un élément mâle 3b, positionnés respectivement de part et d'autre du panneau 1 le long de ses bords longitudinaux par exemple, en matière plastique extrudée telle que du chlorure de polyvinyle, un revêtement 4 de préférence imperméable pour former une face d'appui, c'est-à-dire la face arrière en regard du mur 5 sur lequel le panneau 1 est fixé, globalement parallèle à la face visible et un agent isolant 6 dans le volume délimité par les éléments femelle 3a et mâle 3b, la feuille de parement 2 et le revêtement 4. Dans cet exemple de réalisation non limitatif, le revêtement 4 est avantageusement un film pare-vapeur en aluminium d'une épaisseur d'environ 50 microns procurant au panneau 1 des propriétés ignifuges et l'agent isolant est, par exemple, de la mousse de polyuréthanne.

Les éléments femelle 3a et mâle 3b sont respectivement constitués d'une première aile d'appui respectivement 7a et 7b, s'étendant sensiblement dans le plan de la face d'appui du panneau 1, et d'une seconde aile latérale respectivement 8a et 8b perpendiculaire à l'aile d'appui 7a ou 7b et s'étendant globalement depuis la face d'appui jusqu'à la face visible du panneau 1. Les ailes latérales 8a et 8b comprennent, par ailleurs, à leurs extrémités, à proximité de la face visible du panneau 1, respectivement une gorge 9a et 9b. Lesdites gorges 9a et 9b présentent une section globalement circulaire et sont obtenues avantageusement par profilage des éléments femelle 3a et mâle 3b lors de leur fabrication par extrusion.

Par ailleurs, les bords longitudinaux de la feuille de parement 2 sont respectivement repliées suivant au moins deux lignes de pliures parallèles 10a,11a et 10b,11b pour former respectivement une première jupe 12a et une seconde jupe 12b dont les extrémités libres respectives sont solidarisées par des moyens élastiques dans les gorges 9a et 9b. Lesdits moyens élastiques consistent avantageusement en de la colle polymère 13 ou du mastic de telle sorte que, lors de la jointure de deux panneaux 1 adjacents, les jupes 12a et 12b de la feuille de parement 2 soient en contact élastique telles que représentées sur la figure 2. Un tel contact élastique des jupes 12a et 12b procure une parfaite étanchéité de la jointure entre les deux panneaux 1 en assurant par déformation élastique le rattrapage de la variation dimensionnelle desdits panneaux 1 lors d'une variation de température.

Par ailleurs, et selon une variante d'exécution préférée du panneau 1 conforme à l'invention en référence à la figure 2, les jupes 12a et 12b sont obtenues par pliage des bords longitudinaux de la feuille de parement 2 de sorte que, lors de la jointure de deux panneaux 1 adjacents, elles soient en contact élastique en formant un angle α globalement orienté vers les faces d'appui desdits panneaux 1, c'est-à-dire vers le mur 5 sur lequel ils sont fixés. Dans cet exemple particulier de réalisation, la première jupe 12a obtenue suivant la pliure 10a de la feuille de parement 2 forme un angle d'environ 80° avec le plan de la face d'appui et de la même manière, la seconde jupe 12b obtenue suivant la pliure 10b de la feuille de parement 2 forme un angle d'environ 70° avec ledit plan de la face d'appui. Lors de la jointure de deux panneaux 1 adjacents, les jupes 12a et 12b sont ainsi en contact au niveau de leurs pliures respectives 10a et 10b et s'étendent en formant un angle α d'environ 10° orienté vers les faces d'appui desdits panneaux 1. Cet angle α permet notamment d'assurer l'écoulement de l'eau, susceptible de s'infiltrer entre le mur 5 et les panneaux 1 par temps humide, vers l'extérieur lorsque lesdits panneaux 1 sont posés horizontalement. De plus, une chambre de décompression 14, formée entre les gorges 9a et 9b lors de la jointure des panneaux 1, empêche par capillarité la migration de l'humidité extérieure dans la jointure.

Selon une autre variante d'exécution du panneau conforme à l'invention, l'aile d'appui 7a de l'élément femelle 3a s'étend depuis le bord longitudinal du panneau 1 vers l'extérieur, dans le plan de la face d'appui, et comprend des trous 15 pour permettre la fixation dudit panneau 1 sur un support 5 tel qu'un mur, un plafond ou autre, au moyen de vis, de rivets, de clous ou analogues suivant la nature dudit support 5. Les trous 15 sont avantageusement oblongs afin que la variation dimensionnelle du panneau 1, due à sa dilatation en cas de variation de température, ne soit pas contrariée par les moyens de fixation sur le support 5. La face d'appui 7b de l'élément mâle 3b s'étend dans un creux 16 pratiqué le long du bord longitudinal correspondant du panneau 1 de sorte qu'il y ait, lors de la jointure des panneaux 1, un espace 17 entre l'aile d'appui 7a munie de trous 15 de l'élément femelle 3a et l'aile d'appui 7b de l'élément mâle complémentaire 3b. Cet espace 17 permet notamment de rattraper le défaut de planéité du support 5 sur lequel les panneaux 1 sont fixés de sorte qu'il ne soit plus nécessaire, contrairement à l'art antérieur, d'enduire préalablement le support 5 pour l'aplanir ; ce qui réduit considérablement le temps de pose, et par conséquent le coût de pose, de ces panneaux 1.

Les ailes latérales 8a et 8b des éléments respectivement femelle 3a et mâle 3b comprennent, par ailleurs, des moyens de fixation assurant leur interconnexion lors de la jointure de deux panneaux 1. Les moyens de fixation sont constitués d'une languette 18 munie à son extrémité d'un crochet 19 et positionnée, dans cet exemple particulier, sur l'aile latérale 8b de l'élément mâle 3b perpendiculairement à ladite aile latérale 8b entre la gorge correspondante 9b et l'aile d'appui 7b, de préférence en contiguïté avec ladite gorge 9b. La languette 18 munie du crochet 19 coopère classiquement avec un ergot 20 positionné dans une cannelure 21 de l'aile latérale 8a de l'élément femelle 3a. La cannelure 21 est, de préférence, contiguë à la gorge 9a de fixation de la jupe 12a en formant un plat 22 sur lequel prend avantageusement appui la languette 18, en référence à la figure 2, lors de la jointure de deux panneaux 1. Le plat 21 sur lequel prend appui la languette 18 procure ainsi à la jointure une forte résistance à l'arrachement ; de plus, il permet de faciliter la pose des panneaux 1 sur le mur 5.

En effet, lors de la pose des panneaux 1, en référence à la figure 2, un premier panneau 1 est fixé au mur 5 par des vis 23 en prise avec l'aile d'appui 7a de son élément femelle 3a. La languette 18 de l'élément mâle complémentaire 3b d'un second panneau 1 est introduite dans la cannelure 21 de l'élément femelle 3a du premier panneau 1 en prenant appui sur le plat 22 jusqu'à l'encliquetage, c'est-à-dire jusqu'à ce que le crochet 19 coopère avec l'ergot 20, assurant ainsi l'interconnexion et l'alignement des deux panneaux 1 adjacents. Le poseur peut alors lâcher le second panneau 1 pour faire les trous dans le mur 5, y introduire des chevilles 24 puis fixer le second panneau 1 au moyen desdites vis 23 et répéter l'opération jusqu'à l'obtention d'un pan de mur complet.

Par ailleurs, de bons résultats de résistance à l'arrachement ont été obtenus pour des panneaux 1 d'une épaisseur de 32 millimètres dont l'élément femelle 3a, d'une épaisseur d'environ 3 millimètres, comprend sur son aile d'appui 7a environ 6 trous 15 par mètre carré. Un tel panneau 1 à résister, lors de test d'essais, aux efforts d'arrachement provoqué par un vent atteignant une vitesse de 200 kilomètres par heure. De plus, l'homme du métier adaptera sans difficulté l'épaisseur des ailes des éléments femelle 3a et mâle 3b en fonction du matériau utilisé et de l'effort à l'arrachement maximal que doivent supporter les panneaux 1.

Il va de soi que la languette 18 et la cannelure 21 sont indifféremment positionnées sur l'un ou l'autre des éléments femelle 3a ou mâle 3b sans pour autant nuire à leur efficacité et que lesdits éléments 3a et 3b sont indifféremment positionnés sur les bords longitudinaux ou transversaux des panneaux 1, voire même sur les deux.

De plus, il est bien évident que l'on peut prévoir un raccord adéquat en chlorure de polyvinyle, par exemple, pour joindre deux pans de mur 5 constitués de panneaux 1, notamment, à une encoignure ou à un coin.

Enfin, il va de soi que le panneau de recouvrement comprenant des éléments femelle 3a et mâle 3b conforme à l'invention peut être notamment adapté à tous les types de panneaux d'isolation thermique et/ou phonique et que les exemples que l'on vient de donner ne sont que des illustrations particulières en aucun cas limitatives des domaines d'application de l'invention.

## Revendications

1. Panneau de recouvrement (1) globalement rectangulaire, constitué d'au moins une feuille de parement (2) formant la face avant ou la face visible du panneau (1) lorsqu'il est monté, un revêtement (4) formant la face arrière ou la face d'appui, c'est-à-dire la face en regard du mur (5) ou du plafond, et de mousse polymérisable (6) à chaud, telle que de la mousse de polyuréthanne ou analogue, prise en sandwich entre la feuille de parement (2) et le revêtement (4), ledit panneau (1) comprenant le long de ses bords longitudinaux et/ou transversaux des éléments en matière plastique coopérant avec les éléments complémentaires des panneaux (1) adjacents pour procurer un joint **caractérisé en ce que** le joint est constitué d'un élément femelle (3a) et d'un élément mâle (3b) globalement en forme de L et positionnés respectivement de part et d'autre du panneau (1) le long de ses bords longitudinaux et/ou transversaux, chacun comprenant au moins une première aile d'appui (7a;7b) s'étendant sensiblement dans le plan de la face d'appui du panneau (1) et une seconde aile latérale (8a;8b) s'étendant sur le tranchant du bord du panneau (1) sensiblement depuis sa face d'appui jusqu'à sa face visible et comprenant des moyens de fixation, ladite aile latérale (8a;8b) étant munie à son extrémité, à proximité de la face visible, d'une gorge (9a;9b) dans laquelle est solidarisée par des moyens élastiques l'extrémité libre d'une jupe (12a;12b), obtenue par pliage des bords longitudinaux et/ou transversaux de la feuille de parement (2) de telle sorte que, lors de la jonction de deux panneaux (1), les jupes respectives (12a) et (12b) des panneaux (1) soient en contact élastique.

2. Panneau selon la revendication précédente **caractérisé en ce que** les moyens élastiques pour solidariser les extrémités libres des jupes (12a,12b) dans les gorges (9a,9b) des éléments respectivement mâle (3a) et femelle (3b) consistent en de la colle polymère (13) ou du mastic.

3. Panneau selon l'une quelconque des revendications précédentes **caractérisé en ce que** l'aile d'appui (7a) de l'élément femelle (3a) s'étend dans le plan de la face d'appui du panneau (1) depuis son bord longitudinal et/ou transversal vers l'extérieur et comprend des trous (15) pour permettre la fixation dudit panneau (1) sur un mur (5), un plafond ou autre.

4. Panneau selon la revendication 3 **caractérisé en ce que** les trous (15) de l'aile d'appui (7a) sont oblongs.

5. Panneau selon l'une quelconque des revendications 3 ou 4 **caractérisé en ce que** l'aile d'appui (7b) de l'élément mâle (3b) s'étend globalement parallèlement à la face d'appui dans un creux (16) pratiqué le long du bord correspondant de la face d'appui du panneau (1) de sorte qu'il y ait, lors de la jonction de deux panneaux (1), un espace (17) entre l'aile d'appui (7a) munie de trous (15) de l'élément femelle (3a) et l'aile d'appui (7b) de l'élément mâle (3b).

6. Panneau selon l'une quelconque des revendications précédentes **caractérisé en ce que** les jupes (12a) et (12b) s'étendent vers la face d'appui suivant un angle différent avec ladite face d'appui du panneau (1) de sorte qu'elles procurent, lors de la jonction de deux panneaux (1), un contact élastique dans le plan de la face visible et qu'elles s'étendent en formant un angle α globalement orienté vers la face d'appui du panneau (1).

7. Panneau selon l'une quelconque des revendications précédentes **caractérisé en ce que** les moyens de fixation des ailes latérales (8a) et (8b) des éléments respectivement femelle (3a) et mâle (3b) sont constitués d'une languette (18), positionnée sur l'élément femelle (3a) ou sur l'élément mâle (3b), comprenant à son extrémité un crochet (19) coopérant avec un ergot (20) positionné dans une cannelure (21) de l'aile latérale (8b) ou (8a) respectivement de l'élément mâle (3b) ou de l'élément femelle (3a).

8. Panneau selon la revendication 7 **caractérisé en ce que** la cannelure (21) est contiguë à la gorge (9a) ou (9b) de l'élément femelle (3a) ou de l'élément mâle (3b) en formant un plat (22) sur lequel prend appui la languette (18) lors de la jonction de deux panneaux (1).

9. Procédé de fabrication d'un panneau de recouvrement constitué d'au moins une feuille de parement (2) formant la face visible du panneau (1) lorsqu'il est monté, un revêtement (4) formant la face interne ou la face d'appui, c'est-à-dire la face en regard du mur (5) ou du plafond, et de mousse polymérisable (6) à chaud, telle que de la mousse de polyuréthanne ou analogue, prise en sandwich entre la feuille de parement (2) et le revêtement (4), ledit panneau (1) comprenant le long de ses bords longitudinaux et/ou transversaux des éléments (3a,3b) en matière plastique coopérant avec les éléments complémentaires (3b,3a) des panneaux (1) adjacents pour procurer un joint, conforme à l'une quelconque des revendications précédentes **caractérisé en ce que** :
a) on déroule une feuille de parement (2) classiquement conditionné en rouleau pour la mettre à plat, de préférence horizontalement, puis
b) on retourne par pliage ou par moletage les bords longitudinaux et/ou transversaux de la feuille de parement (2) pour former au moins deux jupes (12a,12b) globalement verticales ,
c) on garnit les gorges (9a,9b) des éléments (3a,3b) de colle polymère ou de mastic et on encolle les extrémités libres des jupes (12a,12b) de la feuille de parement (2) dans lesdites gorges (9a,9b) correspondantes des éléments (3a,3b),
d) on étale les composants d'une mousse polymérisable (6) à chaud préalablement dosés et mélangés sur toute la surface de la feuille de parement (2) et sur une hauteur inférieure à celle des éléments (3a,3b), puis
e) on recouvre la mousse (6) d'un revêtement (4), un film pare-vapeur par exemple, et finalement
f) on contrôle l'expansion de la mousse polymérisable (6) dans un conformateur thermique pour finalement obtenir un panneau (1) de recouvrement qui peut être découpé aux dimensions souhaitées.

10. Procédé selon la revendication 9 **caractérisé en ce qu'**il est utilisé comme feuille de parement (2) un feuillard métallique, par exemple en aluminium, que l'on vient matricer pour procurer à la face visible du panneau (1) un relief décoratif.

## Claims

1. Globally rectangular lining panel (1) composed of at least one facing sheet (2) forming the front face or the visible face of the panel (1) when it is installed, a backing sheet (4) forming the back face or the contact face, in other words the face towards the wall (5) or the ceiling, and hot polymerisable foam (6) such as polyurethane or a similar foam sandwiched between the facing sheet (2) and the backing sheet (4), the said panel (1) comprising plastic elements along its longitudinal and / or transverse edges cooperating with complementary elements in adjacent panels (1) to provide a joint **characterized in that** the joint is composed of a female element (3a) and a male element (3b) in a generally L-shape and positioned on each side of the panel (1) along its longitudinal and / or transverse edges, each comprising at least one first support flange (7a; 7b) extending approximately in the plane of the contact face of the panel (1) and a second lateral flange (8a; 8b) extending along the edge of the panel (1) approximately from its contact face as far as its visible face, and including attachment means, the said lateral flange (8a; 8b) being provided with a groove (9a; 9b) at its end close to the visible face in which the free end of a skirt (12a; 12b) obtained by bending the longitudinal and / or transverse edges of the facing sheet (2) is fixed by elastic means, such that when two panels (1) are joined together, the corresponding skirts (12a) and (12b) of the panels (1) are in elastic contact.

2. Panel according to the previous claim, **characterized in that** the elastic means of fixing the free ends of the skirts (12a; 12b) in the grooves (9a; 9b) of the male element (3a) and the female element (3b) respectively, are polymer glue (13) or mastic.

3. Panel according to any one of the previous claims **characterised in that** the support flange (7a) of the female element (3b) extends in the plane of the contact face of the panel (1) from its longitudinal and / or transverse edge towards the outside and comprises a holes (15) to enable the said panel (1) to be attached to a wall (5), or a ceiling or other.

4. Panel according to claim 3, **characterized in that** the holes (15) of the support flange (7a) are oblong.

5. Panel according to either of claims 3 or 4, **characterized in that** the support flange (7b) of the male element (3b) extends globally parallel to the contact face in a recess (16) formed along the corresponding edge of the contact face of the panel (1) such that when two panels (1) are joined together, there is a space (17) between the contact flange (7a) in which holes (15) are formed in the female element (3a) and the contact flange (7b) of the male element (3b) .

6. Panel according to any one of the previous claims, **characterized in that** the skirts (12a) and (12b) extend towards the support face making a different angle with the said contact face of the panel (1) such that when two panels (1) are joined together, they come into elastic contact in the plane of the visible face, forming an angle α generally facing towards the support face of the panel (1) .

7. Panel according to any one of the previous claims, **characterized in that** the means of attachment of the side flanges (8a) and (8b) of the female element (3a) and the male element (3b) are composed of a tongue (18) positioned on the female element (3a) or on the male element (3b), provided with a hook (19) at its end cooperating with a pin (20) located in a spline (21) in the side flange (8b) of the male element (3b) or in the side flange (8a) of the female element (3a).

8. Panel according to claim 7 **characterized in that** the spline (21) is continuous with the groove (9a) of the female element (3a) or with the groove (9b) of the male element (3b) forming a flat (22) on which the tongue (18) comes into contact at the time that the two panels (1) are joined together.

9. Process for making an lining panel composed of at least one facing sheet (2) forming the visible face of the panel (1) when it is installed, a lining (4) forming the internal face or the contact face, in other words the face towards the wall (5) or the ceiling, and hot polymerisable foam (6) such as polyurethane foam or a similar foam, sandwiched between the facing sheet (2) and the lining (4), the said panel (1) comprising plastic elements along its longitudinal and / or transverse edges (3a, 3b) cooperating with complementary elements (3b, 3a) of adjacent panels (1) to make a joint according to any one of the previous claims, and **characterized in that**:
a) a facing sheet (2), conventionally packaged in a roll, is unwound to make it flat and preferably horizontal, and then
b) the longitudinal and / or transverse edges of the facing sheet (2) are bent over by folding or by knurling, to form at least two globally vertical skirts (12a, 12b),
c) the grooves (9a, 9b) of the elements (3a, 3b) are lined with polymer glue or mastic, and the free ends of the skirts (12a, 12b) of the facing sheet (2) are glued into the corresponding said grooves (9a, 9b) in the elements (3a, 3b),
d) the components of a previously proportioned and mixed hot polymerisable foam (6) are spread over the entire surface of the facing sheet (2) and over a height less than the height of the elements (3a, 3b) and then
e) the foam (6) is covered with a facing (4), for example a vapour barrier film, and finally
f) expansion of the polymerisable foam (6) is controlled in a thermal conforming jig so that the final result is an overlapping panel (1) that can be cut to the required dimensions.

10. Process according to claim 9, **characterized in that** a metal sheet, for example made of aluminium, is used as a facing sheet (2), that is stamped to form a decorative relief on the visible face of the panel (1).

## Patentansprüche

1. Insgesamt rechteckige Abdeckplatte (1), bestehend aus mindestens einer Deckfolie (2), die im montierten Zustand die Vorderseite oder die Sichtfläche der Abdeckplatte (1) bildet und einer Kaschierung (4), die die Rückseite oder die Auflagefläche bildet, das heißt die zur Mauer (5) oder zur Decke zeigende Seite, und einem heißpolymerisierbarem Schaumstoff (6), wie zum Beispiel Polyurethanschaum oder gleichwertiges, als Kern zwischen der Deckfolie (2) und der Kaschierung (4) gefasst. Die besagte Platte (1) besitzt längs ihrer Längs- bzw. Querkanten Elemente aus Kunststoff, die mit den komplementären Elementen der angrenzenden Platten (1) zusammenwirken zur Bildung einer Fuge, dahingehend gekennzeichnet, dass diese Fuge aus einem insgesamt L-förmigem Nutelement (3a) und einem Federelement (3b) besteht und respektive beiderseits der Platte (1) längs der Längs- bzw. Querkanten angebracht ist. Jede Platte besitzt mindestens eine erste Auflagefläche (7a, 7b), die sich spürbar in der Ebene der Auflagefläche der Platte (1) fortsetzt und eine zweite laterale Fläche (8a, 8b), die sich auf der Kante der Platte (1) spürbar von der Auflagefläche der Platte bis zur Sichtfläche hinzieht und mit Befestigungsmitteln versehen ist. Die besagte laterale Fläche (8a, 8b) besitzt an ihrem Ende, in Nähe der Sichtfläche, eine Hohlkehle (9a, 9b), in der das freie Ende einer Schürze (12a, 12b) elastisch festgemacht wird. Diese Befestigung wird durch derartiges Falten der Längs- bzw. Querkanten der Deckfolie (2) erzielt, dass die respektiven Schürzen (12a) und (12b) der Platten (1) bei der Verbindung einen elastischen Kontakt haben.

2. Platte nach dem vorausgehenden Patentanspruch, dahingehend gekennzeichnet, dass die elastischen Mittel zur Befestigung der freien Enden der Schürzen (12a, 12b) der respektiven Federelemente (3a) und Nutelemente (3b) aus Polymerkleber (13) oder Kittmasse bestehen.

3. Platte nach einem der vorausgehenden Patentansprüche, dahingehend gekennzeichnet, dass die Auflagefläche (7a) des Nutelements (3a) sich in der Ebene der Auflagefläche der Platte (1) erstreckt, von der Längs- bzw. Querkante bis nach außen, und Löcher (15) aufweist, um die besagten Platte (1) an einer Wand, einer Decke oder einem anderen Untergrund fest zu machen.

4. Platte nach Patentanspruch 3, dahingehend gekennzeichnet, dass die Löcher (15) der Auflagefläche (7a) als Langlöcher ausgeführt sind.

5. Platte nach einem der Patentansprüche 3 oder 4, dahingehend gekennzeichnet, dass die Auflagefläche (7b) des Federelements (3b) insgesamt parallel zur Auflagefläche in einer Höhlung (16) verläuft, die längs der Kante angebracht ist, so dass bei der Verbindung von zwei Platten (1) ein Raum (17) entsteht, zwischen der mit Löchern (15) versehenen Auflagefläche (7a) des Nutelements (3a) und der Auflagefläche (7b) des Federelements (3b).

6. Platte nach einem der vorausgehenden Patentansprüche, dahingehend gekennzeichnet, dass die Schürzen (12a) und (12b) zur Auflagefläche verlaufen in einem unterschiedlichen Winkel mit der besagten Auflagefläche der Platte (1), so dass die Schürzen bei der Verbindung von zwei Platten (1) einen elastischen Kontakt in der Ebene der Sichtplatte verschaffen und in Form eines Winkel α verlaufen, der insgesamt zur Auflagefläche der Platte (1) orientiert ist.

7. Platte nach einer der vorausgehenden Patentansprüche, dahingehend gekennzeichnet, dass eine der Befestigungsmittel der lateralen Flächen (8a) und (8b) respektive das Nutelement (3a) und das Federelement (8b) sind, bestehend aus einer Zunge (18), die auf dem Nutelement (3a) oder dem Federelement (3b) positioniert ist und die an ihrem Ende einen Haken (19) besitzt, der mit einem Zapfen (20) zusammenwirkt, der in einer Riffelung (21) der lateralen Fläche (8b) oder (8a) des jeweiligen Federelements (3b) oder Nutelements (3a) positioniert ist.

8. Platte nach Patentanspruch 7, dahingehend gekennzeichnet, dass die Riffelung (21) zur Hohlkehle (9a) oder (9b) auf dem Nutelement (3a) oder dem Federelement (3b) anstoßend verläuft und dadurch eine flache Stelle (22) bildet, auf welche die Zunge (18) bei der Verbindung von zwei Platten (1) zum Aufliegen kommt.

9. Fertigungsverfahren einer Abdeckplatte, bestehend aus mindestens einer Deckfolie (2), die im montierten Zustand die Sichtfläche der Abdeckplatte (1) bildet und einer Kaschierung (4), die die Innenseite oder die Auflagefläche bildet, das heißt die zur Mauer (5) oder zur Decke zeigende Seite, und einem heißpolymerisierbarem Schaumstoff (6), wie zum Beispiel Polyurethanschaum oder gleichwertiges, als Kern zwischen der Deckfolie (2) und der Kaschierung (4) gefasst. Die besagte Platte (1) besitzt längs ihrer Längs- bzw. Querkanten Elemente aus Kunststoff (3a, 3b), die mit den komplementären Elementen (3a, 3b) der angrenzenden Platten (1) zusammenwirken zur Bildung einer Fuge, im Sinne einer der vorausgehenden Patentansprüche, dahingehend gekennzeichnet, dass:
a) die Deckfolie (2), die klassisch als Coil konditioniert ist, abgerollt und flach, am besten horizontal, gelegt wird. Anschließend
b) die Längs- bzw. Querkanten der Deckfolie (2) durch Falten oder Rändeln umgelegt werden, um mindestens zwei insgesamt senkrechte Schürzen (12a, 12b) zu bilden.
c) die Hohlkehlen (9a, 0b) der Elemente (3a, 3b) mit Polymerkleber oder Kittmasse gefüllt werden und die freien Enden der Schürzen (12a, 12b) der Deckfolie (2) in die entsprechendenden Hohlkehlen (9a, 9b) der Elemente (3a, 3b) geklebt werden.
d) die Komponenten eines heißpolymerisierbaren Schaumstoffs (6), die zuvor dosiert und gemischt wurden, auf die gesamte Oberfläche der Deckfolie (2) und auf einer Höhe aufgebracht werden, die niedriger als die der Elemente (3a, 3b) ist. Danach
e) der Schaum (6) mit einer Kaschierung (4) versehen wird, zum Beispiel einer Wasserdampfsperre und schließlich
f) die Schäumung des polymerisierbaren Schaumstoffs (6) in einem thermischen Verformer kontrolliert wird, um letztendlich eine Abdeckplatte (1) zu erhalten, die auf die gewünschten Maße zugeschnitten werden kann.

10. Verfahren nach dem Patentanspruch 9, dahingehend gekennzeichnet, dass als Deckfolie (2) ein Metallband, zum Beispiel aus Aluminium, eingesetzt werden kann, dass geprägt wird, um der Sichtfläche der Abdeckplatte (1) ein dekoratives Relief zu verleihen.
